# EUROPEAN PATENT APPLICATION

(11) **EP 0 894 441 A1**
(43) Date of publication of application: **03.02.1999**
(21) Application number: 98650050.2
(22) Date of filing: 04.08.1998
(51) Int. Cl.: A23N 15/04

(54) **Apparatus and a method for preparing mushrooms**

(30) Priority: 01.08.1997 IE 970572
(71) Applicant: R.J. Research Limited, Dundalk, County Louth (IE)
(72) Inventor: Carey, Joseph, Ravensdale, Dundalk, County Louth (IE)
(74) Representative: Gorman, Francis Fergus

(57) **Abstract**

Apparatus (1) for preparing mushrooms (2) for packaging comprises a pair of conveying belts (4) which define a conveying passageway (15) along which the mushrooms (2) are sequentially conveyed through five stations (5,6,7,8,9) with stems (21) of the mushrooms (2) depending between legs (12) of the conveying belts (4) and heads (22) of the mushrooms (2) supported on the conveying belts (4). In the first station (5) a cutting disc (28) parts the root portions (29) from the stems (21). A photosensor on a first carrier (31) which also carries the cutting disc (28) detects the distal end (34) of the root portions (29) as the first carrier (31) is being urged upwardly by a linear motor (35). In the second station (6), a distal portion (43) of the stems (21) is removed so that the remaining portion (44) of the stems (21) is of predetermined length. The third station determines the peripheral shape of the mushroom heads (22) while the fourth station determines if the mushroom heads (22) are discoloured. An ejector element (58) ejects mushrooms in response to the third and fourth stations detecting malformed or discoloured heads. The mushrooms are then graded as they come off the conveying belts (4).

## Description

The present invention relates to a method and apparatus for preparing mushrooms, and in particular, though not limited to such a method and apparatus for preparing the mushrooms for packaging.

In the preparation of mushrooms for packaging, it is important that root portions at the distal end of the stem be removed, and that the length of the remaining portion of the stem from the mushroom head should not exceed a certain predetermined length. In general, it is desirable that the mushrooms should be prepared with a relatively short stem portion remaining, typically, a stem portion not exceeding 15 mm. The mushrooms should also be graded by their head diameter so that mushrooms of substantially similar head size are packed together. It is undesirable to have mushrooms of relatively large head diameter packed with mushrooms of relatively small head diameter, and vice versa. Additionally, it is preferable that the mushroom heads should be free of damage, discolouration and other blemishes, and should also preferably be of reasonably circular shape. One source of damage and discolouration of mushrooms is the handling to which mushrooms are subjected during the process of preparing the mushrooms for packaging. For example, significant handling of mushrooms is required during parting off of the root portion of the stem and during inspection. This is undesirable. A further problem which arises with known methods for preparing mushrooms is that a considerable amount of wastage of edible portions of the mushrooms occurs. In parting off the root portion to ensure that the length of the stem does not exceed a predetermined length, depending on the mushroom size, a significant amount of edible stem portion is removed, and since this contains the root portion it is discarded. This is therefore wasteful and undesirable.

There is therefore a need for a method and apparatus for preparing mushrooms for packaging which minimises damage to the mushrooms, and wastage.

The present invention is directed towards providing such a method and apparatus.

According to the invention there is provided apparatus for preparing mushrooms for packaging, the apparatus comprising a plurality of stations for preparing the mushrooms, and a conveying means for conveying the mushrooms in a predetermined orientation, sequentially through the respective stations, wherein a first one of the said plurality of stations comprises a detecting means for detecting the distal end of the stems of the respective mushrooms, and a first cutting means responsive to the detecting means for parting off a root portion of the respective stems of the mushrooms, and a second one of the said plurality of stations comprises a second cutting means for parting off a distal portion of the stems of the mushrooms after the root portion has been parted off in the event that the length of the stem from the mushroom head exceeds a predetermined length.

In one embodiment of the invention a stem portion collecting means is provided for collecting the distal portions of the stems of the mushrooms which are parted off by the second cutting means.

Preferably, the first cutting means and the detecting means are mounted on a first carrier means, the first carrier means being movable on a first guide means for moving the detecting means for detecting the distal end of the root portion of each stem.

Advantageously, the first carrier means is movable on the first guide means in a direction parallel to the stems for detecting the distal end of the root portion of each stem.

In one embodiment of the invention a means is provided for moving the first carrier means on the first guide means from a rest position spaced apart from the conveying means in a direction towards the conveying means for detecting the distal end of the root portion of each stem.

In another embodiment of the invention a stop means is provided for stopping the means for moving the first carrier means, the stop means being responsive to the detecting means detecting the distal end of the root portion of the stem of each mushroom for stopping the first carrier means when the distal end of the root portion has been detected.

In a further embodiment of the invention the first cutting means is spaced apart from the detecting means so that when the detecting means detects the distal end of each stem the first cutting means is in a position for parting off the root portion of the stem.

Preferably, the detecting means is a non-contact detecting means, and ideally, the detecting means comprises a sensor for detecting a beam transmitted transversely of the direction of movement of the first carrier means for detecting the distal end of the root portion of each stem.

In another embodiment of the invention the second cutting means is mounted on a second carrier means, the second carrier means being movable on a second guide means for altering the position of the second cutting means for varying the length of the remaining stem after the distal portion of the stem has been parted off by the second cutting means.

In one embodiment of the invention a third one of said plurality of stations comprises a means for determining the shape of the heads of each mushroom in plan view.

Preferably, the means for determining the shape of the head of each mushroom comprises an array of sensors which is located spaced apart to one end of the mushrooms and transversely of the stems thereof for detecting the peripheral shape of the mushroom head.

Advantageously, the sensors of the array of sensors are photosensors, and a light source is located to the opposite end of the mushrooms for directing light onto the array in a direction parallel to the mushroom stems.

In one embodiment of the invention an analysing means is provided for analysing the output from the sensor array for determining if a mushroom head is malformed.

In a further embodiment of the invention a fourth one of said plurality of stations comprises a means for detecting discolouration of the heads of the mushrooms.

Preferably, the discolouration detecting means comprises a scanning means for scanning the heads of the mushrooms.

Advantageously, the scanning means for detecting discolouration of the heads of the mushrooms comprises a video camera for recording an image of the head of each mushroom as the mushrooms pass through the fourth station.

In one embodiment of the invention a second analysing means for analysing the output from the scanning means is provided for determining if a mushroom head is discoloured.

Preferably, a light source is provided for directing bright light onto the mushroom head for reflection to the scanning means.

In a further embodiment of the invention a fifth one of the plurality of stations comprises a means for removing mushrooms from the conveying means in response to the means for determining the shape of the mushroom heads determining a malformed mushroom head.

Advantageously, the means for removing mushrooms from the conveying means comprises a pusher element for engaging the stem of each mushroom to be removed from the conveying means for pushing the mushroom to be removed from the conveying means.

Preferably, the pusher means pushes each mushroom to be removed upwardly from the conveying means for disengaging the mushroom stem from the conveying means.

In a further embodiment a grading means is provided in the conveying means for sorting the mushroom by head size.

In a still further embodiment of the invention the conveying means conveys the mushrooms oriented with the heads of the mushrooms upwardly facing, and the stems of the mushrooms extending downwardly from the head.

Ideally, the conveying means comprises a pair of conveying belts located relative to each other so that one leg of one of the conveying belts is adjacent a corresponding leg of the other conveying belt but being spaced apart therefrom for defining a mushroom conveying passageway along which the mushrooms are conveyed from an upstream end to a downstream end of the conveying means by the respective conveying belts.

Preferably, the adjacent legs of the respective conveying belts are adapted for engaging the stems of the mushrooms, and the adjacent legs of the respective conveying belts are arranged sufficiently close to each other so that the mushroom heads are supported by the respective adjacent legs of the conveying belts.

In one embodiment of the invention the width of each conveying belt is such as to expose the root portion of the stems of the mushrooms.

Preferably, adjacent legs of the respective conveying belts which define the mushroom conveying passageway diverge from each other in a downstream direction towards the downstream end of the conveying means for forming the grading means so that the mushrooms of increasing head size are progressively dropped between the respective adjacent legs in order of their size.

In another embodiment of the invention a mushroom collecting means is provided for collecting the mushrooms, and a root portion collecting means is provided for collecting the root portion of the mushroom stem.

Additionally, the invention provides a method for preparing mushrooms for packaging, the method comprising the step of urging the mushrooms along a mushroom conveying passageway by a conveying means, detecting the distal end of the root portion of the stem of each mushroom, and setting a first cutting means at a predetermined distance from the detected distal end for parting the root portion from the stem as the mushroom is conveyed past the first cutting means, the method comprising the further step of cutting a further portion from the distal end of the stem after the root portion has been parted from the stem in the event that the length of the stem from the mushroom head exceeds a predetermined length.

In one embodiment of the invention the method comprises the additional step of determining the outer periphery of the mushroom head of each mushroom for determining if a mushroom head is malformed.

Advantageously, the method comprises the further step of scanning each mushroom head for determining if the mushroom head is discoloured.

Preferably, the method comprises the further step of removing a mushroom from the conveying means in response to detection of a malformed head or a discoloured head.

The invention will be more clearly understood from the following description of a preferred embodiment thereof which is given by way of example only with reference to the accompanying drawings, in which:

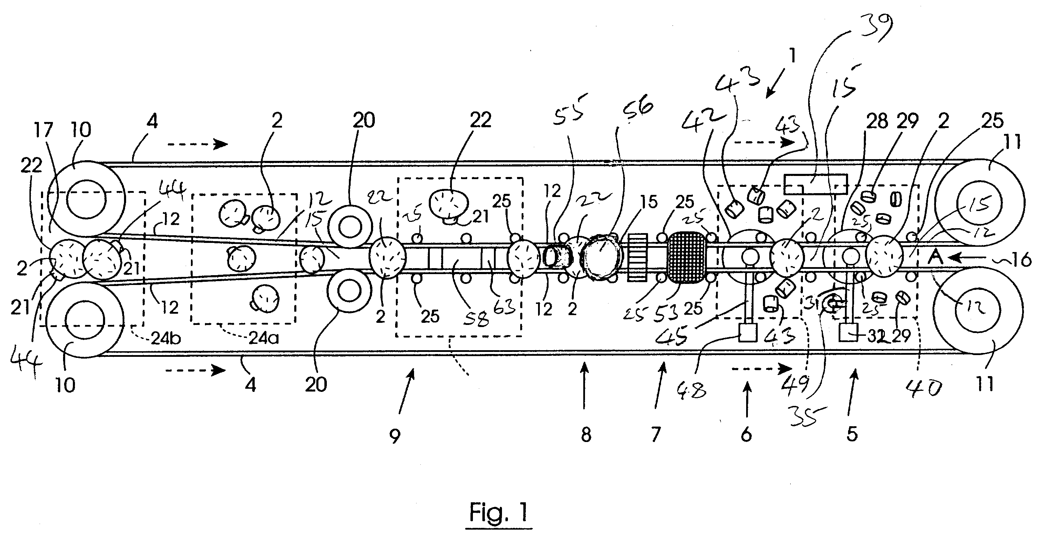

Fig. 1 is a schematic plan view of apparatus according to the invention for preparing and grading mushrooms for packaging,
Fig. 2 is a schematic side elevational view of an upstream portion of the apparatus of Fig. 1,
Fig. 3 is a schematic side elevational view of a downstream portion of the apparatus of Fig. 1, and
Fig. 4 is a block representation of control circuitry for controlling the operation of the apparatus of Fig. 1.

Referring to the drawings there is illustrated apparatus according to the invention which is indicated generally by the reference numeral 1 for preparing and grading mushrooms 2 for packaging. The apparatus 1 comprises a conveying means provided by a pair of endless conveying belts 4 which convey the mushrooms 2 sequentially through a plurality of stations, in this case five stations 5,6,7,8 and 9, which will be described below for preparing the mushrooms for packaging. The conveying belts 4 extend around and are supported at their respective opposite ends on pairs of pulleys, namely, drive pulleys 10 and idler pulleys 11. The drive and idler pulleys 10 and 11 are rotatably carried on a framework (not shown) of the apparatus 1. Electrically powered drive motors (not shown) drive the drive pulleys 10. The conveying belts 4 are arranged so that adjacent legs 12 of the respective belts 4 define a mushroom conveying passageway 15 along which the mushroom 2 are conveyed by the conveying belts 4 through the stations 5 to 9 in the direction of the arrow A from an upstream end 16 to a downstream end 17.

A pair of intermediate idler pulleys 20 also rotatably carried on the framework (not shown) are located towards the downstream end 17 of the passageway 15 for engaging the legs 12 of the conveying belts 4. The portions of the legs 12 of the conveying belts 4 which extend between the idler pulleys 11 and the intermediate idler pulleys 20 are spaced apart a distance which is just sufficient for accommodating stems 21 of the mushrooms 2 in the passageway 15. The legs 12 of the conveying belts 4 between the idler pulleys 11 and the intermediate idler pulleys 20 are sufficiently close for supporting the heads 22 of the mushrooms 2. A plurality of pressure rollers 25 rotatably carried on the framework (not shown) are located along the legs 12 of the conveying belts 4 between the idler pulleys 11 and the intermediate idler pulleys 20 for lightly urging the legs 12 into light engagement with the stems 21 of the mushrooms 2 so that the mushrooms 2 are conveyed along the mushroom passageway 15 by the conveying belts 4.

The portions of the legs 12 of the conveying belts 4 which extend between the intermediate idler pulleys 20 and the drive pulleys 10 diverge from each other for forming a grading means for grading the mushrooms so that the mushrooms are sorted by head diameter. As the mushrooms 2 are conveyed by the conveying belts 4 beyond the intermediate idler pulleys 20 the mushrooms drop between the legs 12 of the conveying belts 4 in order of their head size, the smaller mushrooms 2 dropping between the legs 12 of the conveying belts 4 before the larger mushrooms 2.

A plurality of mushroom collecting means, in this case collecting bins 24 are placed beneath the conveying belts 4 for collecting the graded mushrooms 2. In this embodiment of the invention two bins 24a and 24b are provided for collecting small and large mushrooms, respectively. Needless to say, many more bins may be provided for collecting mushrooms where more precise grading of the mushrooms is required.

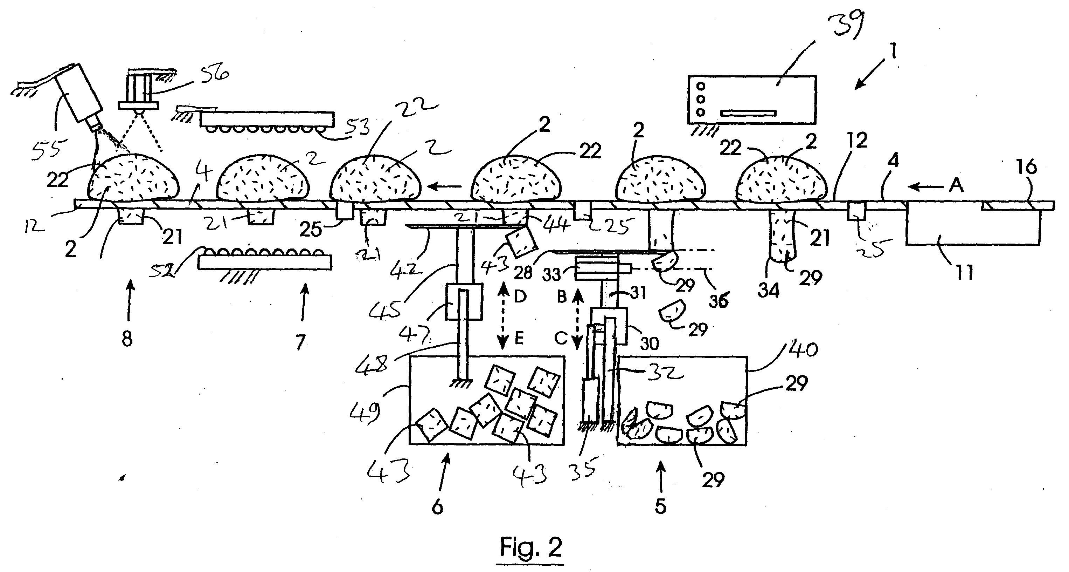

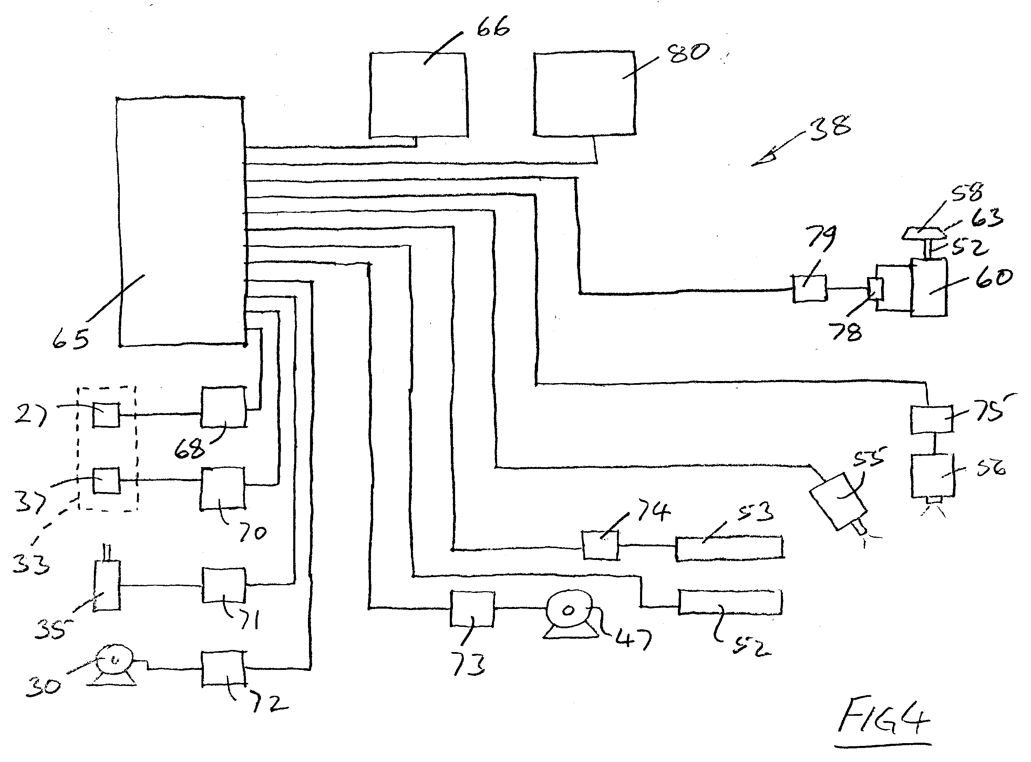

Turning now to the five stations 5 to 9, the first one of the stations, namely, the first station 5 comprises a first cutting means, namely, a first cutting disc 28 for parting off root portions 29 of the stems 21 of the mushrooms 2. The first cutting disc 28 is rotatably carried on a first carrier means, namely, a first carrier 31, and is driven by an electrically powered motor 30 which is also carried on the first carrier 31. The first carrier 31 also carries a detecting means, namely, a photosensor 33 for detecting the distal end 34 of the root portions 29 of the mushrooms 2 as the mushrooms 2 are approaching the photosensors 33. The photosensor 33 comprises a laser light source 27, which directs a beam of laser light represented by the chain dotted line 36 in an upstream direction towards the oncoming mushrooms. The laser lightbeam 36 is reflected on striking the root portions 29 of the mushroom stems 21, and is picked up by a sensor 37 in the photosensor 33, see Figs. 2 and 4. The carrier 31 is slidably carried on a first guide means, namely, a first guide member 32 which is mounted on the framework (not shown) and permits the carrier 31 to slide vertically in the direction of the arrows B and C, in other words, parallel to the stems 21 of the mushrooms 2.

A means for moving the first carrier 31 in the directions of the arrows B and C comprises an electrically powered linear motor 35 which operates under the control of a control circuit 38 in a control box 39. The control circuit 38 is described below with reference to Fig. 4. The linear motor 35 urges the first carrier 31 in the direction of the arrow B from a lower rest position with the cutting disc 28 below the level of the distal end 34 of the root portion 35 of the longest stem mushroom 2 likely to be encountered for urging the cutting disc 28 and the photosensor 33 upwardly. The linear motor 35 urges the first carrier 31 upwardly in the direction of the arrow B until the laser light beam 36 strikes the distal end 34 of the root portion 29 of the approaching mushroom 2. On the sensor 37 photosensor 33 detecting the reflected laser light beam from the distal end 34 of the root portion 29, a signal is sent from the photosensor 33 to the control circuit 38, which instantly stops the linear motor 35 which in turns retains the first carrier 31 in the stopped position. The cutting disc 28 is spaced apart vertically from the photosensor 33 an appropriate distance to part the root portion 29 from its stem 21 so that all the root portion 29, but only the root portion 29 is removed as the mushroom passes over the cutting disc 28.

The control circuit 38 controls the linear motor 35 so that as soon as the root portion 29 has been parted from the stem 21 the linear motor 35 is again activated to return the first carrier 31 to the lower rest position, at which stage the control circuit 38 controls the linear motor 35 to again urge the first carrier 31 upwardly in the direction of the arrow B until the photosensor 33 detects the distal end 34 of the root portion 29 of the next approaching mushroom 2 and so on.

It has been found, in general, that the root portion of a typical mushroom is generally of length in the range of 10 mm to 20 mm, and accordingly, the spacing between the photosensor 33 and the cutting disc 28 is set at the maximum of the range, namely, at 20 mm so that all the root portion of the mushroom stems is removed.

A root portion collecting means, namely, a root portion bin 40 is located beneath the first cutting disc 28 for collecting root portions 29 parted off by the first cutting disc 28.

The second of the five stations, namely, the second station 6 comprises a second cutting means, namely, a second cutting disc 42 for parting off a distal portion 43 of the stem 21 after the root portion 29 has been parted off so that the remaining portion 44 of the stem 21 does not exceed a predetermined length, in this embodiment of the invention approximately 15 mm. The second cutting disc 42 is rotatably carried on a second carrier means, namely, a second carrier 45 which also carries an electrically powered motor 47 for rotating the second cutting disc 42 for parting off the distal portions 43 of the stems 21. The second carrier 45 is slidably carried on a second guide means, namely, a second guide member 48 mounted on the framework (not shown), and is vertically movable in the direction of the arrows D and E for adjusting the position of the second cutting disc 42 to be at a desired distance below the conveying belts 4 for determining the lengths of the remaining portions 44 of the stems 21 of the mushrooms 2. A manual adjusting means (not shown) is provided for adjusting the second carrier 45 along the second guide member 48 to the desired position.

A distal portion collecting means, namely, a distal portion bin 49 is located beneath the second cutting disc 42 for collecting the distal portions 43 parted off from the stems 21 of the mushrooms 2 by the second cutting disc 42.

The third of the five stations, namely, the third station 7 comprises a means for determining the shape of the heads 22 of the mushrooms 2, which comprises an array of photocells 52 which are located beneath the legs 12 of the conveying belts 4 on the framework (not shown). A light source, namely, an array of lights 53 which are mounted on the framework (not shown) above the legs 12 of the conveying belts 4 and the mushrooms 2 direct light beams to the corresponding photocells of the array 52 for determining the shape of the mushroom heads 22. Signals from the array of photocells 52 are relayed to the control circuit 38 for analysis for determining the shape of the heads 22, and for detecting malformed heads, as will be described below.

The fourth of the stations, namely, the fourth station 8 comprises a means for detecting discolouration of the heads 22 of the mushrooms 2 which comprises a scanning means for scanning the mushroom heads 22, namely, a video camera 55. The video camera 55 is mounted on the framework (not shown) and is located above the legs 12 of the conveying belts 4 for scanning and receiving an image of the heads 22 of the mushrooms 2 as they pass through the fourth station 8. A bright light source 56 mounted on the framework (not shown) directs light onto the mushroom heads 22 for facilitating imaging of the heads 22 by the video camera 55. Signals from the video camera 55 are relayed to the control circuit 38 for comparing the video images with a reference image as will be described below.

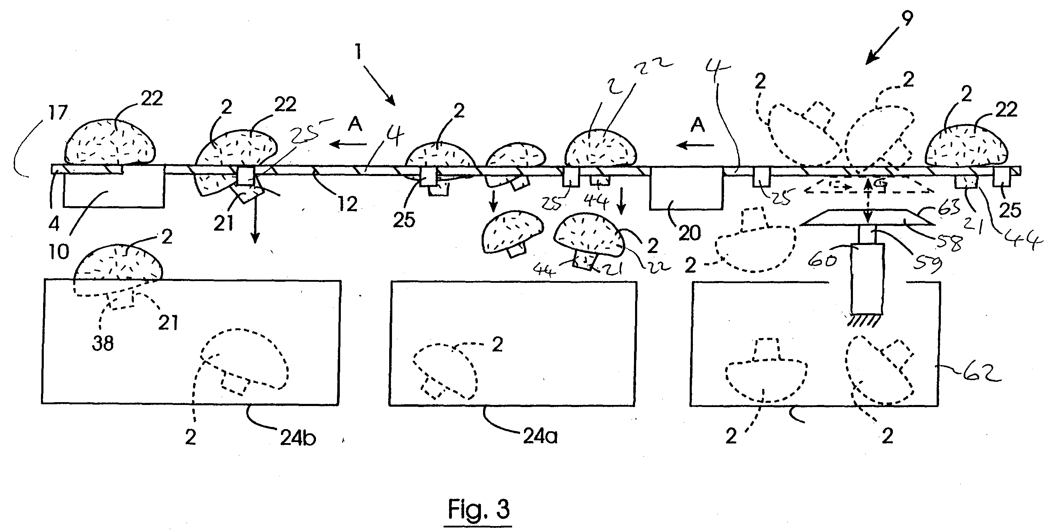

The fifth of the stations, namely, the fifth station 9 comprises a means, namely an ejector element 58 for removing reject mushrooms 2 from the passageway 15 in response to the third station identifying a malformed mushroom head or the fourth station determining a discoloured mushroom head. The ejector element 58 is mounted on a piston rod 59 of a double acting pneumatic ram 60, which is in turn carried on the framework (not shown). The ram 60 under the control of the control circuit 38 urges the piston rod 59, and in turn the ejector element 58 upwardly in the direction of the arrow G between the legs 12 of the conveying belts 4 for engaging the remaining portion 44 of the stem 21 of a mushroom 2 to be ejected. As the ejector element 58 is urged between the legs 12 of the conveying belts 4 the mushrooms 2 are urged upwardly so that the stems 21 disengage the legs 12 of the conveying belt 4, and the mushrooms 2 thus topple from the belts 4 as illustrated by the mushrooms 2 in broken lines at the station 9 in Fig. 3. A reject collecting means, namely, a reject bin 62 located beneath the legs 12 at the fifth station 9 collects rejected mushrooms 2. A leading edge 63 of the ejector element 58 is ramped upwardly for gradually and progressively engaging the stems 21 of the mushrooms 2 to be ejected.

Referring now to Fig. 4, the control circuit 38 comprises a microprocessor 65 which controls the operation of the apparatus 1 under the control of suitable software, which is stored in a read only memory (ROM) 66. The laser light source 27 of the photosensor 33 is operated by the microprocessor 65 through a driver 68. Signals from the sensor 37 of the photosensor 33 are relayed to an analogue to digital converter 70 and in turn to the microprocessor 65 where the signals are read. A driver 71 operates the linear motor 35 under the control of the microprocessor 65 to operate as already described. The motor 30 for driving the first cutting disc 28 is driven by a driver 72 under the control of the microprocessor 65. The second motor 47 for driving the second cutting discs 42 is driven under the control of the microprocessor 65 through a driver 73. The light source array 53 is powered under the control of the microprocessor 65 through a driver 74 and signals from the sensor array 52 are read by the microprocessor 65. The light source 56 is powered through a driver 75 and signals from the video camera 55 are read by the microprocessor 65. A valve 78 for controlling the supply of high pressure air to the pneumatic ram 60 is operated under the control of the microprocessor 65 through a driver 79.

A random access memory (RAM) 80 stores reference shapes of mushroom heads and reference images of mushroom heads. A first analysing means, namely analysing software in the microprocessor 65 analyses the signals from the sensor array 52 and constructs an image of the peripheral shape of each mushroom, which is then compared with reference shapes stored in the RAM 80. A second analysing means provided by suitable analysing software in the microprocessor 65 analyses the signals received from the video camera 55 and constructs images of the mushroom heads and compares the constructed images with reference images to determine if the constructed images are sufficiently free of discolouration to be passed. The operation of such analysing software will be well known to those skilled in the art.

In use, mushrooms 2 are fed sequentially but spaced apart into the passageway 15 at the upstream end 16 so that the mushrooms 2 are oriented with their heads 22 upwards and resting on the legs 12 of the conveying belts 4, and their stems 21 depending downwardly between the legs 12 of the conveying belts 4. The legs 12 of the conveying belts 4 urge the mushrooms 2 along the passageway 15 through the five stations 5 to 9, where in the first station the root portions 29 are parted from the stems 21 and collected in the bin 40. In the second station 6 the distal portions 43 are parted off from the stems 21 and collected in the bin 49. In the third station 7 the shape of the mushroom heads 22 are determined, and in the fourth station 8 the mushroom heads 22 are checked for any discolouration. Any mushrooms determined by the third and fourth stations to either have malformed or discoloured heads are ejected from the passageway 15 by the ejector element 58 when the mushroom to be rejected reaches the fifth station 9. The remaining mushrooms 2 continue through the passageway 15, and as they pass along the downstream portion of the passageway 15 between the intermediate pulleys 20 and the drive pulleys 10 the remaining mushrooms 2 are graded by their size, the smaller mushrooms dropping between the legs 12 of the conveying belt 4 into the first of the bins 24, namely, the bin 24a, and the larger mushrooms dropping into the second of the bins, namely, the second bin 24b.

The advantages of the invention are many. In particular, the apparatus according to the invention prepares and grades mushrooms for packaging with the minimum of wastage, and with the minimum of handling, thereby, minimising damage and discolouration of the mushrooms. By providing the first cutting means for parting off the root portion of the stem which in general, is discarded, due to the fact, that it may often contain compost, only the root portion is discarded. This thus minimises wastage. The fact that the second cutting means is provided for cutting the stem to the desired length allows the distal portion of the stem which is removed by the second cutting means to be collected and subsequently used in the manufacture of food ingredients and the like. Other advantages of the invention will be readily apparent to those skilled in the art.

While the grading of the mushrooms has been described as being carried out at the diverging portions of the legs of the conveying belts, it is envisaged that in many cases grading may be carried out in the third station by the array of photocells. The size of the mushroom head would be determined by the number of photocells shaded from the light source by the mushroom head. In which case, a series of ejector elements would be provided at spaced apart intervals along the mushroom conveying passageway for ejecting mushrooms of various sizes into corresponding collection bins.

While the detecting means for determining the location of the distal end of the root portion of the stem has been described as being a photosensor detector, any other suitable detecting means may be used, for example, infra-red ultrasonic or the like. It will also be appreciated that other suitable means for determining the shape of the mushroom heads may be used as may any other suitable means for detecting discolouration of the mushroom heads.

## Claims

1. Apparatus for preparing mushrooms (2) for packaging, the apparatus (1) comprising a plurality of stations (5,6,7,8,9) for preparing the mushrooms (2), and a conveying means (4) for conveying the mushrooms (2) in a predetermined orientation, sequentially through the respective stations (5,6,7,8,9), characterised in that a first (5) one of the said plurality of stations comprises a detecting means (33) for detecting the distal end (34) of the stems (21) of the respective mushrooms, and a first cutting means (28) responsive to the detecting means (33) for parting off a root portion (29) of the respective stems of the mushrooms, and a second one (6) of the said plurality of stations comprises a second cutting means (42) for parting off a distal portion (43) of the stems of the mushrooms after the root portion (29) has been parted off in the event that the length of the stem (21) from the mushroom head (22) exceeds a predetermined length.

2. Apparatus as claimed in Claim 1 characterised in that a stem portion collecting means (49) is provided for collecting the distal portions (43) of the stems of the mushrooms which are parted off by the second cutting means (42).

3. Apparatus as claimed in Claim 1 or 2 characterised in that the first cutting means (28) and the detecting means (33) are mounted on a first carrier means (31), the first carrier means (31) being movable on a first guide means (32) for moving the detecting means (33) for detecting the distal end (34) of the root portion (29) of each stem, and the first carrier means (31) is movable on the first guide means (32) in a direction parallel to the stems for detecting the distal end (34) of the root portion (29) of each stem.

4. Apparatus as claimed in Claim 3 characterised in that a means (35)is provided for moving the first carrier means (31) on the first guide means (32) from a rest position spaced apart from the conveying means (4) in a direction towards the conveying means (4) for detecting the distal end of the root portion of each stem, and preferably, a stop means is provided for stopping the means for moving the first carrier means (31), the stop means being responsive to the detecting means (33) detecting the distal end (34) of the root portion of the stem of each mushroom for stopping the first carrier means (31) when the distal end of the root portion has been detected.

5. Apparatus as claimed in any preceding claim characterised in that the first cutting means (28) is spaced apart from the detecting means (33) so that when the detecting means (33) detects the distal end (34) of each stem the first cutting means (28) is in a position for parting off the root portion (29) of the stem.

6. Apparatus as claimed in any preceding claim characterised in that the detecting means (33) is a non-contact detecting means, and preferably, the detecting means (33) comprises a sensor (37) for detecting a beam (36) transmitted transversely of the direction of movement of the first carrier means (31) for detecting the distal end (34) of the root portion of each stem.

7. Apparatus as claimed in any preceding claim characterised in that the second cutting means (42) is mounted on a second carrier means (45), the second carrier means (45) being movable on a second guide means (48) for altering the position of the second cutting means (42) for varying the length of the remaining stem (44) after the distal portion (43) of the stem has been parted off by the second cutting means (42).

8. Apparatus as claimed in any preceding claim characterised in that a third one (7) of said plurality of stations comprises a means (52) for determining the shape of the heads of each mushroom in plan view, and preferably, the means (52) for determining the shape of the head of each mushroom comprises an array (52) of sensors which is located spaced apart to one end of the mushrooms and transversely of the stems thereof for detecting the peripheral shape of the mushroom head (22), and preferably, the sensors of the array (52) of sensors are photosensors, and a light source (53) is located to the opposite end of the mushrooms for directing light onto the array in a direction parallel to the mushroom stems, and preferably, a first analysing means (65) is provided for analysing the output from the sensor array (52) for determining if a mushroom head is malformed.

9. Apparatus as claimed in any preceding claim characterised in that a fourth one (8) of said plurality of stations comprises a means (55) for detecting discolouration of the heads of the mushrooms.

10. Apparatus as claimed in Claim 9 characterised in that the discolouration detecting means (55) comprises a scanning means (55) for scanning the heads of the mushrooms, and preferably, the scanning means (55) for detecting discolouration of the heads of the mushrooms comprises a video camera (55) for recording an image of the head of each mushroom as the mushrooms pass through the fourth station, and preferably, a second analysing means (65) for analysing the output from the scanning means (55) is provided for determining if a mushroom head is discoloured.

11. Apparatus as claimed in Claim 10 characterised in that a light source (56) is provided for directing bright light onto the mushroom head for reflection to the scanning means (55).

12. Apparatus as claimed in any preceding claim characterised in that a fifth one (9) of the plurality of stations comprises a means (58) for removing mushrooms from the conveying means (4) in response to the means (52) for determining the shape of the mushroom heads determining a malformed mushroom head.

13. Apparatus as claimed in Claim 12 characterised in that the means (58) for removing the mushrooms is further responsive to the discolouration detecting means (55) detecting discolouration of a mushroom head, and preferably, the means (58) for removing mushrooms from the conveying means (4) comprises a pusher element (58) for engaging the stem of each mushroom to be removed from the conveying means (4) for pushing the mushroom to be removed from the conveying means (4), and preferably, the pusher means (58) pushes each mushroom to be removed upwardly from the conveying means (4) for disengaging the mushroom stem from the conveying means (4).

14. Apparatus as claimed in any preceding claim characterised in that a grading means (12) is provided in the conveying means for sorting the mushroom by head size.

15. Apparatus as claimed in any preceding claim characterised in that the conveying means (4) conveys the mushrooms oriented with the heads of the mushrooms upwardly facing, and the stems of the mushrooms extending downwardly from the head.

16. Apparatus as claimed in any preceding claim characterised in that the conveying means (4) comprises a pair of conveying belts (4) located relative to each other so that one leg (12) of one of the conveying belts (4) is adjacent a corresponding leg (12) of the other conveying belt (4) but being spaced apart therefrom for defining a mushroom conveying passageway (15) along which the mushrooms are conveyed from an upstream end (16) to a downstream end (17) of the conveying means (4) by the respective conveying belts (4), and preferably, the adjacent legs (12) of the respective conveying belts (4) are adapted for engaging the stems of the mushrooms, and the adjacent legs (12) of the respective conveying belts (4) are arranged sufficiently close to each other so that the mushroom heads are supported by the respective adjacent legs (12) of the conveying belts (4), and preferably, the width of each conveying belt (4) is such as to expose the root portion (29) of the stems of the mushrooms.

17. Apparatus as claimed in Claim 16 characterised in that the adjacent legs (12) of the respective conveying belts (4) which define the mushroom conveying passageway (15) diverge from each other in a downstream direction towards the downstream end (17) of the conveying means (4) for forming the grading means (12) so that the mushrooms of increasing head size are progressively dropped between the respective adjacent legs (12) in order of their size.

18. Apparatus as claimed in any preceding claim characterised in that a mushroom collecting means (24) is provided for collecting the mushrooms, and a root portion collecting means (40) is provided for collecting the root portion of the mushroom stem.

19. A method for preparing mushrooms for packaging, the method comprising the step of urging the mushrooms (2) along a mushroom conveying passageway (15) by a conveying means (4), detecting the distal end (34) of the root portion (29) of the stem (21) of each mushroom (2), and setting a first cutting means (28) at a predetermined distance from the detected distal end (34) for parting the root portion (29) from the stem as the mushroom is conveyed past the first cutting means (28), the method comprising the further step of cutting a further portion (43) from the distal end of the stem (21) after the root portion (29) has been parted from the stem (21) in the event that the length of the stem (44) from the mushroom head (22) exceeds a predetermined length.

20. A method as claimed in Claim 19 characterised in that the method comprises the additional step of determining the outer periphery of the mushroom head (22) of each mushroom for determining if a mushroom head is malformed, and preferably, the method comprises the further step of scanning each mushroom head (22) for determining if the mushroom head is discoloured, and preferably, the method comprises the further step of removing a mushroom (2) from the conveying means in response to detection of a malformed head or a discoloured head.
